# EUROPEAN PATENT APPLICATION

(11) **EP 4 840 733 A2**
(43) Date of publication of application: **18.11.2026**
(21) Application number: 26209524.3
(22) Date of filing: 21.07.2020
(51) Int. Cl.: B62D 35/00

(54) **ROUNDED WHEELBAY**

(30) Priority: 22.07.2019 NL 2023548
(62) Document number(s) of the earlier application(s) in accordance with Art. 76 EPC: 20746308.4 / 4 003 818
(71) Applicant: DAF Trucks N.V., 5643 TW Eindhoven (NL)
(72) Inventor: VAN DEN HEIJKANT, Rob Adrianus Johannes, 5643 TW Eindhoven (NL); RENTEMA, Date Willem Egbert, 5643 TW Eindhoven (NL); VAN DIJK, Niek Jan Gerard, 5643 TW Eindhoven (NL); KRUIJSSEN, Frouke, 5643 TW Eindhoven (NL)
(74) Representative: V.O.

(57) **Abstract**

According to an aspect of the invention, the claimed invention reduces the liquid spray generated by the traveling of a truck on a wet surface. A further object of the invention is to reduce traveling wheel drag of a truck. The invention aims for solving the mentioned objects by providing a modified rounded truck wheel bay that follows the shape of a truck wheel. The wheel bay has a cut out portion extending from a point along the rear part of the wheel bay to the bottom surface of the truck. The cut out exposes a portion of the mudguard. The exposed portion of the mudguard has a rounded guiding surface which connects the mudguard to the outer side surface of the truck.

## Description

### BACKGROUND OF THE INVENTION

The present invention relates to the reduction of liquid spray and induced aerodynamic drag of heavy goods vehicles known as trucks. In particular, the invention relates to a truck wheel bay having a mudguard facing the running surface of a wheel and having an outer valance located on the periphery in the plane of an outer side surface of the truck. Trucks are subjected to strict regulatory requirements relating to spray reduction and wheel bay modifications such as, but not limited to, Commission Regulation (EU) No. 109/2011 EEC. The mentioned requirements for trucks call for a need to change the wheel bay to reduce water spray generated from a wheel traveling on a wet surface. At the same time the invention intends to reduce aerodynamic drag caused by wheel motion. Existing solutions to reduce air drag are not concerned with spray reduction.

The object of the claimed invention is to reduce the liquid spray generated by the traveling of a truck on a wet surface. A further object of the invention is to reduce traveling wheel drag of a truck.

### SUMMARY OF THE INVENTION

The invention aims for solving the mentioned objects by providing a truck having a modified rounded truck wheel bay that follows the shape of a truck wheel. The wheel bay has an outer valance located on the periphery of the wheel bay opening. The outer valance is in the same plane as the outer side surface of the truck. The wheel bay has a mudguard inside which faces the running surface of the wheel. The valance extends concentrically, to the wheel and possibly a fender, over the arc of the wheel bay opening. The valance starts at the front part of the wheel bay and extends to the rear of the wheel bay.

The valance contains a cut out portion extending from a point along the rear part of the valance to the bottom surface of the truck. The cut out exposes a portion of the mudguard. The exposed portion of the mudguard has a rounded guiding surface which connects the mudguard to the outer side surface of the truck. The aerodynamic effect is that spray is optimally suppressed by guiding it in the longitudinal direction, towards the mudguard and in rearward direction of the truck thus reducing the side ways extension of spray that is emitted from the wheels and the road surface.

### BRIEF DESCRIPTION OF THE DRAWINGS

The invention is further described with reference to the drawings wherein:
Figure 1 shows a schematic perspective embodiment of the present invention;
Figure 2 shows a schematic top view of the embodiment of Figure 1;
Figure 3 (A, B, C) shows a top view of an exposed mud guard portion with a plurality of rounded guiding surface variations ;
Figure 4 (A, B) shows an embodiment having fins and corrugations on a mudguard surface;
Figure 5 (A, B) shows a comparison view with a prior art example of the airflow.

### DETAILED DESCRIPTION

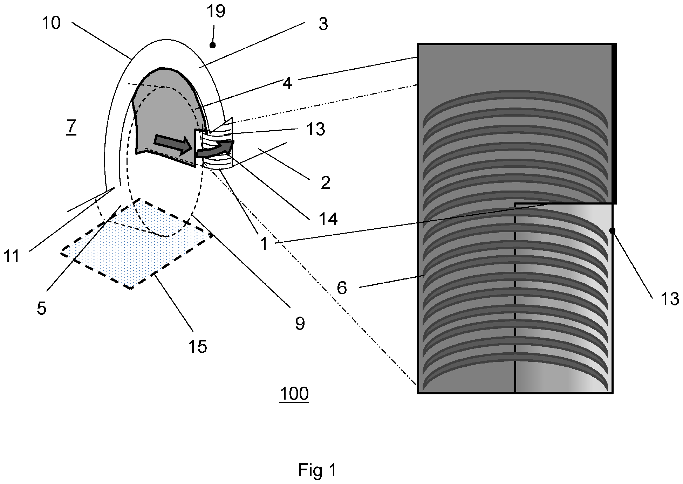

The present invention provides for a truck wheel bay 7 of a wheel enclosure 100 as shown in Figure 1, having a mudguard 4, also shown in exploded view. The wheel bay 7 follows the shape of a truck wheel 9 and further has an outer valance 3. Valance 3 is a component located approximately within a vertical plane that is parallel to the longitudinal plane of the vehicle and which may form part of a mudguard or of the vehicle bodywork. The outer valance 3 is located on a peripheral arc 10 of a truck wheel bay's opening. The valance 3 extends towards a bottom surface of the truck concentrically over the arc from a front part 11 of the wheel bay 7 to a rear portion. The wheel bay 7 has a mudguard 4 facing a running surface 5 of the wheel 9. The mudguard 4 is understood to include a component intended to trap a liquid thrown up by tyres in motion. The mudguard 4 directs the trapped liquid towards a road surface. The mudguard 4 may entirely or partially form an integral part of the truck bodywork or other parts of the truck. The valance 3, which may include a fender 19 and an outer side surface 2 of the truck, contains a cut out portion 13 near the valance's rear portion. The cut out 13 extends from a point along the rear part of the valance 3 to the bottom surface of the truck. The cut out 13 exposes the mudguard 4 which comprises a guiding portion 1 with a rounded surface. The guiding portion 1 connects the mudguard 4 and the outer side surface 2 of the truck.

The guiding portion 1 directs and facilitates the out flowing of air 14 from the wheel bay 7 along the outer side surface 2 of the truck trailing behind the front wheel enclosure 100. The cut out 13 and guiding portion 1 assists air flowing out from inside the wheel bay to follow the side of the truck. By following the side of the truck, wheel bay vortices (called the wake) and drag is reduced. The air flowing out of the wheel bay via the cut out 13 and guiding portion 1 has a flow substantially free from turbulences which is capable of capturing spray and leading it in a rearward direction.

In a further aspect of the invention the truck wheel bay 7 has fins 6 located on the mud guard 4 (see Figure 1, exploded view). The fins 6 may extend on the guiding portion 1 in the longitudinal direction of the truck. The extension of the fins 6 create a ribbed profile on the mud guard 4 which may include the guiding portion 1.

The fins 6 may be curved down toward the road surface 15 in a lateral direction relative to the longitudinal direction of the truck. The fins increase a catchment surface area of the mudguard 4 and guiding portion 1. The increased catchment surface area provides a larger capacity for collecting spray. The larger capacity of the mud guard to collect liquid reduces the amount of spray that flows out from the wheel bay 7. The effect of the mud guard that spray is suppressed, in that it reduces pulverisation of liquid, which may include water, thrown upwards by the tyres of a truck in motion. Thus the mud guard, valance, cut out and fins work together to form a spray suppression system that additionally reduces wheel bay drag.

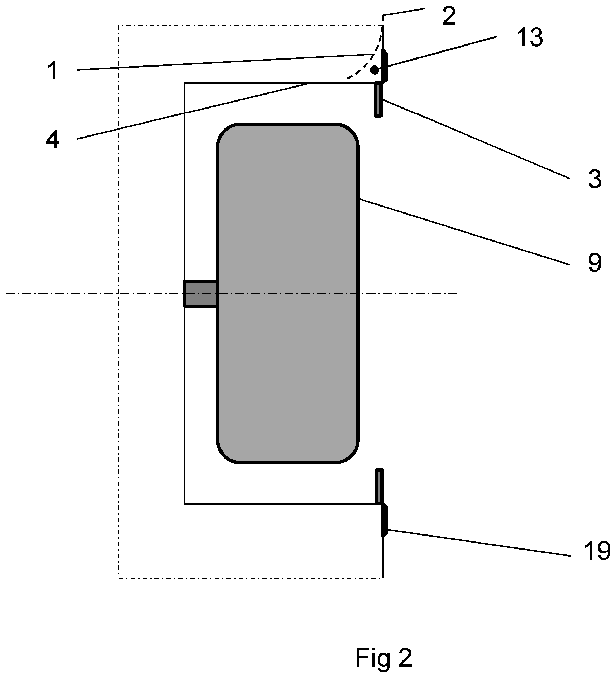

In Figure 2, a schematic top view layout is shown of the outer valance 3 relative to the fender 19. The valance 3 and fender 19 are in the same plane as the outer side surface 2 of the truck. The layout shows how the cut out 1 of valence 3 and further may extend to include fender 19 and a portion of the outer side surface 2 of the truck. A larger cut out 13 with a larger rounding of the guiding portion 1 may further reduce the resistance to air flowing 14 out of the wheel bay 1.1. A lower wheel bay resistance, to outflowing air 14 may result in reduced wheel bay drag.

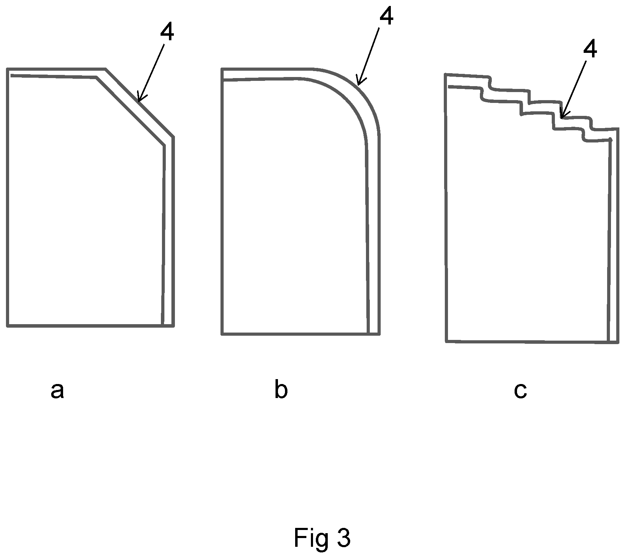

In Figure 3, various alternatives a, b, c, are shown in a top view of an exposed mud guard portion 4 with a plurality of rounded guiding surface variations. In 3a a mudguard portion is depicted to include a chamfer of a corner, in 3b the mudguard 4 has a corner with a radius and in Figure 3c the mudguard portion 4 has a jagged tapering of the corner. Other means known in the art by the skilled person to smooth the transition between two perpendicular surfaces are included in the understanding of a rounding. The rounding of the guiding portion 1 facilitates a smooth transition of the airflow 14 out of the wheel bay 100.

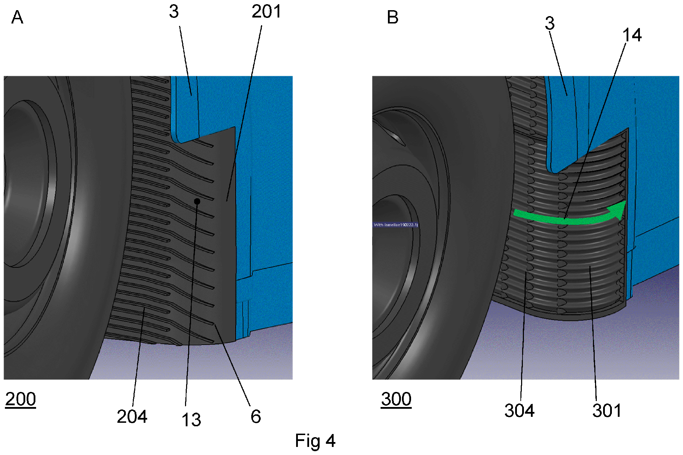

Figure 4 shows a further aspect of the invention. In the further aspect,Figure 4A, the mud guard 204 of truck wheel bay 200 has a corrugated rounded mudguard surface 201 with fins 6. In Figure 4B, corrugated surface 301 is arranged that the ridges and valleys of the corrugation run in a lateral direction relative to the longitudinal direction of the truck. The corrugated surface 301 performs a similar function than a mudguard with fins 6. The corrugated rounded surface 301 of the mud guard 304 increases the spray collecting capacity of the mud guard 304 by small slots to collect water. The spray collecting capacity of the mudguard 304 is increased due to an increased surface area of the corrugated mudguard 304. The corrugations further help streamline the outflowing air 14 from the wheel bay via the guiding portion 301.

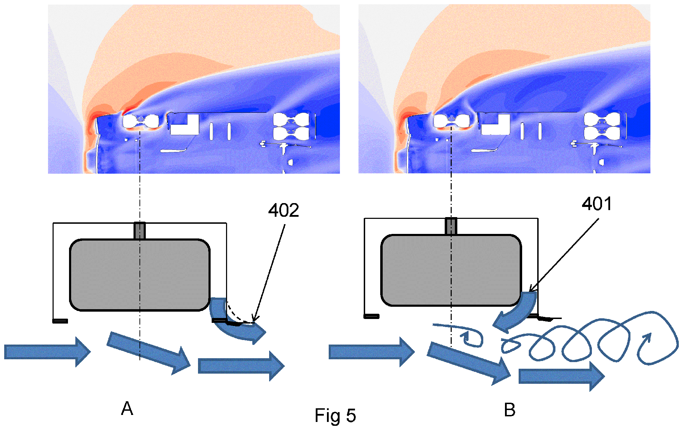

In Figure 5 the difference is clearly shown between a cut out 13 and guiding surface 1 to the flow path 402 of the out flowing air (see Figure 5A) and the flow path 401 of a wheel bay without the cut out and guiding surface (see Figure 5B). The out flowing air which is guided by the cut out 13 and guiding surface 1 is projected much closer to the side of the truck and creates far less vortices and drag.

### ALTERNATIVE EMBODIMENTS

In an alternative embodiment of the invention the wheel bay has a mudguard with guiding portion which has fins on the mudguard surface. The fins extend in a longitudinal directions as shown in figure 1. The fins may be curved down toward the road surface and assists the out flowing of the air from the wheel enclosure 7.

In an alternative embodiment of the invention the wheel bay with a mudguard contains a cut out near the rear part of the wheel bay in the valance, fender and the outer side surface of the truck as shown in figure 2. The rounded guiding portion 1 connects the mud guard 4 and the outer side surface 2 of the truck.

In an alternative embodiment of the invention the wheel bay has a mudguard with guiding portion which is chamfered, tapered or jagged from the mudguard 4 to the outer side surface of the truck as shown in figure 3. In an alternative embodiment of the invention the wheel bay has a mudguard with guiding portion 1 which has a corrugated surface 301 as shown in figure 4. The corrugation of the mud guard and guiding portion surfaces contains ridges and valleys which extend in a lateral direction relative to the longitudinal direction of the truck and assists the out flowing of the air 14 from the wheel enclosure 300.

## Claims

1. A truck wheel bay having a mudguard facing the running surface of a wheel, the wheel bay following the shape of a wheel of a truck, the wheel bay further having an outer valance located on the periphery in the plane of an outer side surface of the truck; said wheel bay and said valance extending towards a bottom surface of the truck concentrically over an arc from a front part of the wheel bay to a rear portion, wherein said valance contains a cut out portion near the rear portion of the valance extending from a point along the rear part of the valance to the bottom surface of the truck exposing a portion of the mudguard, wherein said exposed mud guard portion has a rounded guiding surface, connecting the mudguard to the outer side surface of the truck; said guiding surface directs out flowing air from the wheel bay along the trailing body of the truck, wherein the mudguard with guiding portion has a corrugated surface with ridges and valleys running in a lateral direction relative to the longitudinal direction of the truck.

2. A truck wheel bay according to claim 1, further comprising fins located on the mudguard extending in a longitudinal direction of the truck forward.

3. A truck wheel bay according to claim 2 wherein said fins are curved down toward the road surface.

4. A truck wheel bay according to any preceding claim, wherein said cut out near the rear portion of the valance extends from a point midway along the rear part of the said valance to the bottom surface of the truck.

5. A truck wheel bay according to any preceding claim wherein the cut out extends into the said fender and towards the said outer side surface of the truck.
